Europäisches Patentamt

European Patent Office

Office européen des brevets

(11) Veröffentlichungsnummer: **0 254 711**
**B1**

(12) **EUROPÄISCHE PATENTSCHRIFT**

(45) Veröffentlichungstag der Patentschrift:
03.10.90

(51) Int. Cl.⁵: **C22B 4/04,** C22B 15/00

(21) Anmeldenummer: **87890164.4**

(22) Anmeldetag: **09.07.87**

(54) **Verfahren zur Gewinnung von Kupfer.**

(30) Priorität: **22.07.86 AT 1977/86**

(43) Veröffentlichungstag der Anmeldung:
**27.01.88 Patentblatt 88/4**

(45) Bekanntmachung des Hinweises auf die Patenterteilung:
**03.10.90 Patentblatt 90/40**

(84) Benannte Vertragsstaaten:
**BE CH DE ES FR GB GR IT LI LU NL SE**

(56) Entgegenhaltungen:
**AT-B- 257 964**
**DE-A- 2 605 943**
**DE-B- 2 207 048**
**US-A- 4 003 739**

**Metallurgica Plant and Technology 1 (1985) S. 11-16**

(73) Patentinhaber: **VOEST-ALPINE**
**INDUSTRIEANLAGENBAU GESELLSCHAFT m b.H.,**
**Turmstrasse 44, A-4020 Linz(AT)**

(72) Erfinder: **Koch, Erwin, Dr., Ederackerstrasse 7,**
**A-4060 Leonding(AT)**
Erfinder: **Glöckler, Gerhard, Dipl.-Ing., Ehrendorf 79,**
**A-4694 Ohlsdorf(AT)**
Erfinder: **Müller, Heinz, Dr. Dipl.-Ing., Badergasse 1,**
**A-4501 Neuhofen(AT)**

(74) Vertreter: **Wolfram, Gustav, Dipl.-Ing.,**
**Schwindgasse 7 P.O. Box 205, A-1041 Wien(AT)**

## Beschreibung

Die Erfindung betrifft ein Verfahren zur Gewinnung von Kupfer aus oxidischen und/oder silikatischen Kupfererzen durch thermisches Zersetzen.

Es ist z.B. aus der DE-A 2 207 048 bekannt, oxidische Kupfererze in Schacht- oder Flammöfen unter Zusatz von Koks als Reduktionsmittel auf Rohkupfer (Schwarzkupfer) zu verschmelzen. Diese Verfahren haben den Nachteil, daß das erhaltene metallische Kupfer durch die unerwünschte Mitreduktion anderer Oxide (Eisen-, Silizium-, Kobalt-Oxide) verunreinigt ist; die Schlacken sind meist hochviskos und erfordern daher den Zusatz von großen Mengen an basischen Schlackenbildern. Außerdem müssen die zum Einsatz kommenden Feinerze bzw. Flotationskonzentrate vor dem Schmelzprozeß agglomeriert werden.

Aus den angegebenen Gründen konnten zur Verfügung stehende Erze mit Kupfergehalten bis zu 30% Cu bisher nicht in zufriedenstellender Weise aufgearbeitet werden.

Die Erfindung bezweckt die Vermeidung der dargestellten Nachteile und Schwierigkeiten und stellt sich die Aufgabe, ein Verfahren zur Gewinnung von Kupfer aus oxidischen und/oder silikatischen Kupfererzen zu schaffen, bei welchem das in den Erzen enthaltene Kupfer weitestgehend ausgebracht wird, das erhaltene Produkt eine große Reinheit, d.h. Freiheit von anderen Begleitmetallen, aufweist, im Prozeß eine geringere Menge an Zuschlagstoffen als bisher erforderlich ist und es ermöglicht wird, mit niedrigviskosen Schlacken zu fahren, womit ein leichte Trennbarkeit der Schlacke vom erschmolzenen Kupfer erreicht wird. Weiters soll es die Erfindung möglich machen, Kupfererze oder Konzentrate mit niedrigeren Kupfergehalten als bisher, beispielsweise mit Kupfergehalten von etwa 10 bis 20%, zu verarbeiten.

Diese Aufgabe wird erfindungsgemäß bei einem Verfahren der eingangs beschriebenen Art dadurch gelöst, daß die Kupfererze in einer durch Plasmastrahlen erhitzten Reaktionszone aufgeschmolzen und auf eine Temperatur erhitzt werden, welche mindestens 1500°C beträgt und so gewählt wird, daß zwar einerseits ein thermischer Zerfall der oxidischen bzw. silikatischen Kupferverbindungen bewirkt wird, daß aber andererseits die Sauerstoffdrücke von Begleitmetalloxiden noch genügend niedrig sind, um ihre thermische Spaltung zu verhindern.

Nach einer bevorzugten Ausführungsform wird die Reaktion in einem gegenüber der Atmosphäre abdichtbaren Ofen durchgeführt, um den Zutritt von Sauerstoff zu verhindern und wird (werden) der bzw. die Plasmastrahl(en) unter Zuführung eines inerten Gases, vorzugsweise Argon, zu den Plasmabrennern gebildet.

Das erfindungsgemäße Verfahren beruht darauf, daß im Brennzentrum der Plasmastrahlen an der Schlackenoberfläche Temperaturen in solcher Höhe entstehen, daß zwar Kupferoxid ($Cu_2O$) ohne Zuhilfenahme eines zusätzlichen Reduktionsmittels, wie C, thermisch zersetzt wird, andererseits jedoch die Sauerstoffdrücke aller übrigen Begleitmetalle noch genügend niedrig sind, um eine thermische Spaltung der Oxide anderer Metalle nicht Platz greifen zu lassen.

Infolge dieser unterschiedlichen Eigenschaft der thermischen Zersetzbarkeit des Kupferoxides gegenüber Begleitmetalloxiden ergeben sich als Vorteile des erfindungsgemäßen Verfahrens ein geringerer Wärmebedarf und geringer Abgasmengen. Weiters haben die hohen Temperaturen in der Reaktionszone zur Folge, daß die Schlacke trotz des Einsatzes silikatischer Erze dünnflüssig ist und sich Metall und Schlacke leicht trennen.

Nach einer weiteren bevorzugten Ausführungsform können zur Erniedrigung der Viskosität der in der Reaktionszone gebildeten sauren Schlacke dem Kupfererz-Möller CaO-hältige Schlackenbildungsstoffe zugefügt werden.

In manchen Fällen kann es im Rahmen der Erfindung zweckmäßig sein – vorzugsweise gegen Ende des thermischen Zersetzungsprozesses –, dem Kupfererz-Möller kohlenstoffhältige Zuschlagstoffe in unterstöchiometrischer Menge in bezug auf die Reduktion von Kupferoxid ($Cu_2O$) zuzufügen, um Restgehalte an Kupfer in der Schlacke so gering wie möglich zu halten.

Vorzugsweise wird die Temperatur der Schlacke auf mindestens 1600°C gehalten.

Die Zuführung des Kupfererz-Möllers kann kontinuierlich erfolgen.

Das erfindungsgemäße Verfahren wird am besten in einem Ofen mit einer feuerfesten Auskleidung, mit einer Bodenelektrode und mit einem oder mehreren durch den Ofendeckel geführten Plasmabrenner(n), ausgeführt, wobei die Auskleidung des Bodens und der Wand des Ofens aus feuerfestem kohlenstofffreiem Material besteht, vorzugsweise aus einem Dauerfutter aus Feuerleichtsteinen und einem Verschließfutter aus Feuerbeton auf Basis von $Al_2O_3$, $Cr_2O_3$, $Fe_2O_3$ und CaO.

Als Bodenelektrode kann vorteilhaft eine Kupferelektrode vorgesehen sein.

Das erfindungsgemäße Verfahren wird durch das folgende Beispiel näher erläutert:

In einen Plasmaofen mit einer lichten Weite von 40 cm, dessen Boden und Wand mit einem kohlenstofffreien Futter ausgekleidet war, welcher Ofen mit einem abdichtbaren Deckel versehen war, durch den ein mit Argon betriebener Plasmabrenner geführt und dessen Boden mit einer Kupferelektrode versehen war, wurden 23,5 kg eines oxidischen Kupferkonzentrates kontinuierlich während eines Zeitraumes von 3 h gefördert und niedergeschmolzen.

Das Kupferkonzentrat hatte die folgende Zusammensetzung:

| Cu | Co | CaO | MgO | $SiO_2$ | FeO |
|---|---|---|---|---|---|
| 21,30 % | 1,31 % | 4,48 % | 6,90 % | 29,99 % | 2,80 % |

| $Al_2O_3$ | S | $P_2O_5$ | Glühverlust | Feuchte |
|---|---|---|---|---|
| 2,93 % | 1,35 % | 0,275 % | 16,34 % | 3,40 % |

Gegen Ende der kontinuierlichen Förderung wurde eine mittlere Temperatur des verflüssigten Einsatzmaterials von 1700°C festgestellt. Nach 3 h ab Förderbeginn wurden Schlacke und Metall flüssig abgestochen. Das Kupferausbringen betrug 4,8 kg, das sind 94 %. Die Zusammensetzung des metallischen Kupfers war folgende:

| Cu | Si | Al | Mg | S |
|---|---|---|---|---|
| 98,5 % | weniger als 0,01 % | 0,001 % | 0,001 % | 0,81 % |

| P |
|---|
| weniger als 0,002 % |

Eisen und Kobalt waren nur in Spuren nachweisbar.
Die Zusammensetzung der Restschlacke war folgende:

| Cu | Co | CaO | MgO | $SiO_2$ | FeO |
|---|---|---|---|---|---|
| 2,6 % | 2,63 % | 9,0 % | 13,88 % | 60,33 % | 5,63 % |

| $Al_2O_3$ |
|---|
| 5,89 % |

Der Versuch wurde wiederholt mit einem Zusatz von 4,7 kg CaO und 1 kg Koks zum Möller. Bei einem Ausbringen von 98,5 % Kupfer wurde jedoch ein Eisengehalt von 0,85 % und ein Kobaltgehalt von 0,8 % ermittelt. Der Kupfergehalt in der Restschlacke betrug 0,3 %.

**Patentansprüche**

1. Verfahren zur Gewinnung von Kupfer aus oxidischen und/oder silikatischen Kupfererzen durch thermisches Zersetzen, dadurch gekennzeichnet, daß die Kupfererze in einer durch Plasmastrahlen erhitzten Reaktionszone aufgeschmolzen und auf eine Temperatur erhitzt werden, welche mindestens 1500°C beträgt und so gewählt wird, daß zwar einerseits ein thermischer Zerfall der oxidischen bzw. silikatischen Kupferverbindungen bewirkt wird, daß aber andererseits die Sauerstoffdrücke von Begleitmetalloxiden noch genügend niedrig sind, um ihre thermische Spaltung zu verhindern.

2. Verfahren nach Anspruch 1, dadurch gekennzeichnet, daß die Reaktion in einem gegenüber der Atmosphäre abdichtbaren Ofen durchgeführt wird, um den Zutritt von Sauerstoff zu verhindern, und daß der bzw. die Plasmastrahl(en) unter Zuführung eines inerten Gases, vorzugsweise Argon, zu den Plasmabrennern gebildet wird (werden).

3. Verfahren nach Anspruch 1, dadurch gekennzeichnet, daß zur Erniedrigung der Viskosität der in der Reaktionszone gebildeten sauren Schlacke dem KupfererzMöller CaO-hältige Schlackenbildungsstoffe zugefügt werden.

4. Verfahren nach den Ansprüchen 1 bis 3, dadurch gekennzeichnet, daß die Temperatur der Schlacke auf mindestens 1600°C gehalten wird.

5. Verfahren nach den Ansprüchen 1 bis 4, dadurch gekennzeichnet, daß die Zuführung des Kupfererz-Möllers kontinuierlich erfolgt.

## Claims

1. Method of recovering copper from oxidic and/or silicate copper ores by way of pyrometallurgy, characterised in that the copper ores are melted up in a reaction zone heated by plasma jets and are heated to a temperature amounting to at least 1,500 centigrade and selected in a manner that, on the one hand, a thermic decomposition of the oxidic and silicate copper compounds, respectively, is effected, while, on the other hand, the oxygen pressures of accompanying metal oxides are still low enough to prevent their thermic cleavage.

2. Method according to claim 1, characterised in that the reaction is carried out in a furnace sealable relative to the atmosphere, so as to prevent the access of oxygen, and that the plasma jet(s) is (are) formed while supplying an inert gas, preferably argon, to the plasma burners.

3. Method according to claim 1, characterised in that, in order to lower the viscosity of the acid slag formed in the reaction zone, CaO-containing slag formers are added to the burden of copper ore.

4. Method according to claims 1 to 3, characterised in that the temperature of the slag is kept at at least 1,600 centigrade.

5. Method according to claims 1 to 4, characterised in that the supply of the burden of copper ore takes place continuously.

## Revendications

1. Procédé pour extraire le cuivre de minerais de cuivre des types oxydes et/ou silicates par décomposition à la chaleur, caractérisé en ce que l'on fond les minerais de cuivre dans une zone de réaction chauffée par des jets de plasma et on les porte à une température d'au moins 1500°C et qui est choisie de manière que, d'une part, il y ait effectivement décomposition à la chaleur des composés du cuivre des types oxydes et silicates mais que, d'autre part, les pressions d'oxygène des oxydes des métaux d'accompagnement soient encore suffisamment basses pour que ces oxydes ne se décomposent pas à la chaleur.

2. Procédé selon la revendication 1, caractérisé en ce que la réaction est effectuée dans un four qui peut être rendu étanche à l'égard de l'atmosphère afin d'éviter l'entrée d'oxygène, et en ce que le ou les jets de plasma sont formés avec apport d'un gaz inerte, de préférence l'argon, aux brûleurs à plasma.

3. Procédé selon la revendication 1, caractérisé en ce que, pour diminuer la viscosité des laitiers acides formés dans la zone de réaction, on ajoute des agents scorifiants contenant CaO au lit de fusion du minerai de cuivre.

4. Procédé selon les revendications 1 à 3, caractérisé en ce que l'on maintient la température du laitier à au moins 1600°C.

5. Procédé selon les revendications 1 à 4, caractérisé en ce que l'alimentation du lit de fusion de minerai de cuivre est continue.